# EUROPEAN PATENT APPLICATION

(11) **EP 2 027 830 A2**
(43) Date of publication of application: **25.02.2009**
(21) Application number: 08005942.1
(22) Date of filing: 28.03.2008
(51) Int. Cl.: A61C 15/04

(54) **An improved structure of floss stick**

(30) Priority: 24.08.2007 TW 96214194 U
(71) Applicant: Rau, Wen Chin, Taiwan 249 (TW)
(72) Inventor: Rau, Wen Chin, Taiwan 249 (TW)
(74) Representative: Muttock, Neil John

(57) **Abstract**

An improved structure of floss stick (1) includes a body (11), two forks (12,13) extending downward from a side of the body (11) and a handle (14) extending laterally from the body (11). The floss stick (1) has plural lengths of flosses (2a,2b,2c). The two ends of each of flosses (2a,2b,2c) are respectively connected to the two forks (12,13), such that the flosses (2a,2b,2c) are parallely arranged and spaced from each other. When a user utilizes the floss stick (1) for flossing, the flosses (2a,2b,2c) are inserted between the user's teeth, and the handle (14) is held to move to and fro along the teeth sides and removes the food and plaque therefrom.

## Description

### FIELD OF THE INVENTION

The present invention relates to an improved structure of a floss stick, in particular to a floss stick having plural lengths of flosses arranged thereon.

### BACKGROUND OF THE INVENTION

To maintain personal oral hygiene, many people use to clean their teeth after every meal. The common ways to keep the mouth clean include brushing and flossing. At flossing, a conventional floss stick is inserted between teeth to remove foods and dental plaque from the teeth by moving a floss arranged at a body of the floss stick to and fro and scraping along the teeth sides, especially close to the gums. Generally, the structure of the conventional floss stick includes two parallel forks extending from a side of the body, and the two ends of the floss are stretched across the free ends of the forks.

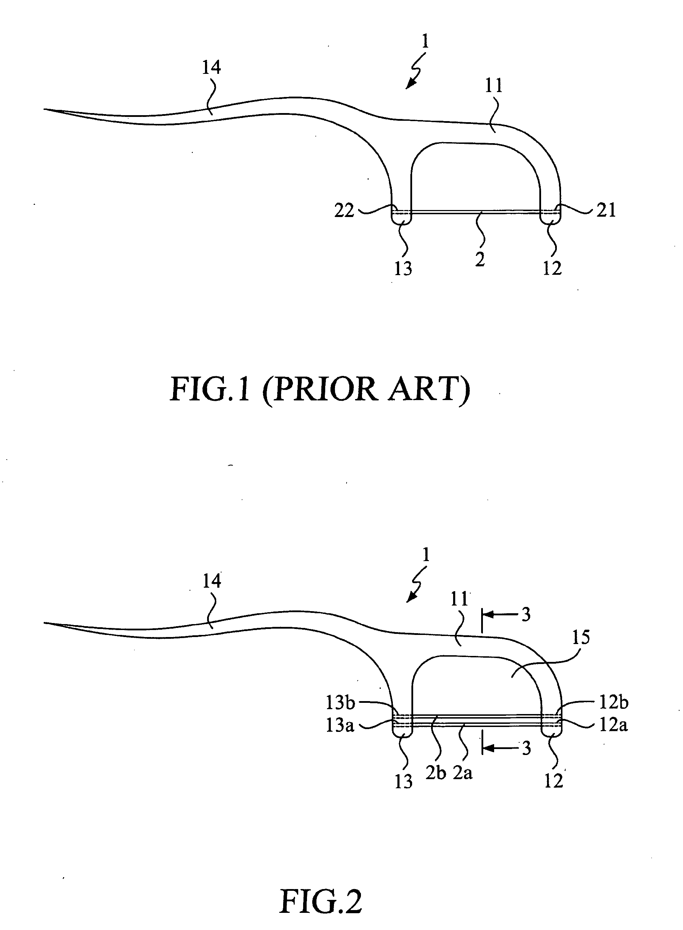

Fig. 1 shows a schematic view of a conventional floss stick. A floss stick 1 comprises two parallel forks 12, 13 extending downward from a side of a body 11. Through holes 21, 22 are oppositely arranged at the free ends of the forks 12, 13, for connecting and fastening the two ends of the floss 2, respectively.

A handle 14 extends from a junction of the fork 13 and the body 11, which is shaped to be held by a user for flossing the teeth and removing food from the teeth.

As the conventional floss stick comprises only a single floss arranged across the forks. When the floss is inserted between the teeth for flossing, the floss provides small and limited contact area that comes into touch with the teeth, and accordingly, the user has to spend more time to slide the floss stick to and fro along the teeth sides in order to completely clean the teeth. Otherwise, the cleaning effect is poor.

Furthermore, because of the limited contact area of the floss, it is not easy for the floss stick to dislodge trapped particles from the narrow spaces between teeth, and the flossing effect is not good.

In addition, the floss is usually made of a cotton or rayon, which is stretched and fixed to the two forks of the body of the floss stick. The prolonged stretching would adversely reduce the elasticity of the floss. Moreover, when the floss is slid to and fro repeatedly between the teeth to remove the foods and dental plaque, the friction between the teeth and the floss and the pulling force acting on the floss for taking out the trapped particles would damage the floss, and these forces would eventually cause the floss to snap. The reaction force generated at the forks at breakage of the floss sometimes may hurt the gums, leading to bleeding gums, and also, the trapped particles would remain stuck to the teeth.

### SUMMARY OF THE INVENTION

Consequently, in view of the defects of the conventional floss stick, the primary object of the present invention is to provide a floss stick with an improved structure that includes plural lengths of flosses and provides better flossing effect. When moving the floss stick along the teeth sides, the plural lengths of flosses provide a larger contact area and facilitate the removal of trapped particles between the teeth. Thus, the structure enhances the flossing effect.

Another object of the present invention is to provide an improved structure for floss stick that has plural lengths of flosses. The acting force for moving the floss stick is uniformly distributed among the flosses. Even when any one of the flosses is broken, the reaction force to the floss stick is relatively small and may be counteracted by the acting forces at the other flosses. In other words, the structure prevents the forks from hitting the gums and secures the safety of the gums at flossing.

To fulfill the above objects, the present invention provides an improved structure for floss stick. The floss stick includes a body, two forks extending downward from a side of the body and a handle extending laterally from the body. The floss stick has plural lengths of flosses. The two ends of the flosses are respectively connected to two forks of a body of a floss stick, such that the flosses are parallely arranged and spaced from each others. At flossing, the flosses are inserted between the teeth and touch the teeth sides simultaneously. When a user slides the floss stick to and fro along the teeth sides, food and plaque at the teeth would attach to or be trapped in between the flosses, and then they can be removed easily and effectively as the floss stick is pulled out from the teeth. The improved floss stick provides a better cleaning effect.

Furthermore, because there are plural lengths of flosses arranged at a single floss stick, even when any one of the flosses snaps during flossing, the acting forces at the other flosses counteract the impact force, so that the floss stick is prevented from direct hitting to the gums and safety is secured.

When inserting the flosses to and pulling the flosses out from the teeth, each of the flosses passes the same interstices between the teeth. Accordingly, each floss would floss the same interstices for the same number of times. Therefore, the flossing effect of the floss stick is multiplied.

Furthermore, the parallel arranged flosses approximately form a net, and can effectively remove trapped particles from the teeth.

### BRIEF DESCRIPTION OF THE DRAWINGS

Fig. 1 shows a schematic view of a conventional floss stick;
Fig. 2 shows a schematic view of an improved structure of a floss stick in accordance with a first embodiment of the present invention;
Fig. 3 shows a cross-sectional view taken along line 3-3 of Fig. 2;
Fig. 4 shows a schematic view of an improved structure of a floss stick in accordance with a second embodiment of the present invention;
Fig. 5 shows a schematic view of an improved structure of a floss stick in accordance with a third embodiment of the present invention; and
Fig. 6 shows a perspective view that the floss stick is used to floss a user's teeth.

### DETAILED DESCRIPTION OF THE PREFERRED EMBODIMENTS

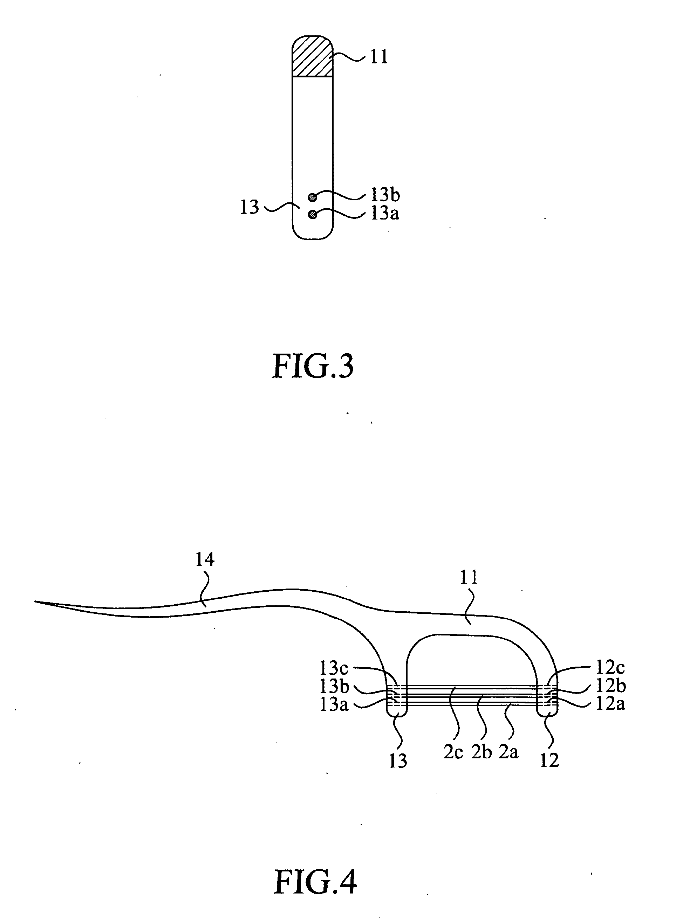

Please refer to Figs. 2 and 3. Fig. 2 shows a schematic view of an improved structure of a floss stick in accordance with a first embodiment of the present invention. Fig. 3 shows a cross-sectional view taken along line 3-3 of Fig. 2. The floss stick, generally designed with reference numeral 1, comprises a body 11 arranged at a front part of the floss stick 1, and two forks, namely, a first fork 12 and a first fork 13, extends downward from a side of the body. The first fork 12 is spaced with a predetermined distance from the second fork 13.

Two first holes 12a, 13a are respectively and oppositely arranged at the free end of the first fork 12 and that of the second fork 13. Similarly, two second holes 12b, 13b are respectively and oppositely arranged at the free end of the first fork 12 and that of the second fork 13. An end of a first floss 2a passes through the first hole 12a, and the other end of the first floss 2a passes through the first hole 13a. Similarly, one end of a second floss 2b passes through the second hole 12b, and the other end of the second floss 2b passes through the second hole 13b. Both the first and the second flosses are fixed to the first fork 12 and the second fork 13.

The first floss 2a and the second floss 2b are horizontally and parallely arranged along the lengthwise direction of the body 11. The flosses 2a, 2b are stretched and fixed in the corresponding holes at the first and second forks 12, 13. There is a predetermined distance between the first and second flosses 12, 13, and a space 15 is defined by the second floss 2b, the first fork 12, the second fork 13 and the body 11.

A handle 14 extends laterally from a junction of the body 11 and second fork 13, which is used for the holding by a user.

As shown in Fig. 4, it shows a schematic view of an improved structure of a floss stick according to a second embodiment of the present invention. The improved structure of the floss stick 1 is similar to that of the first embodiment, and the same reference numerals are used to identify elements that are similar or identical in the two embodiments, except that in the second embodiment, there are two third holes 12c and 13c arranged above the second holes 12b, 13b, respectively. A third floss 2c is stretched and fixed in the corresponding holes 12c, 13c at the first fork 12 and the second fork 13, wherein a predetermined distance between two adjacent flosses is kept.

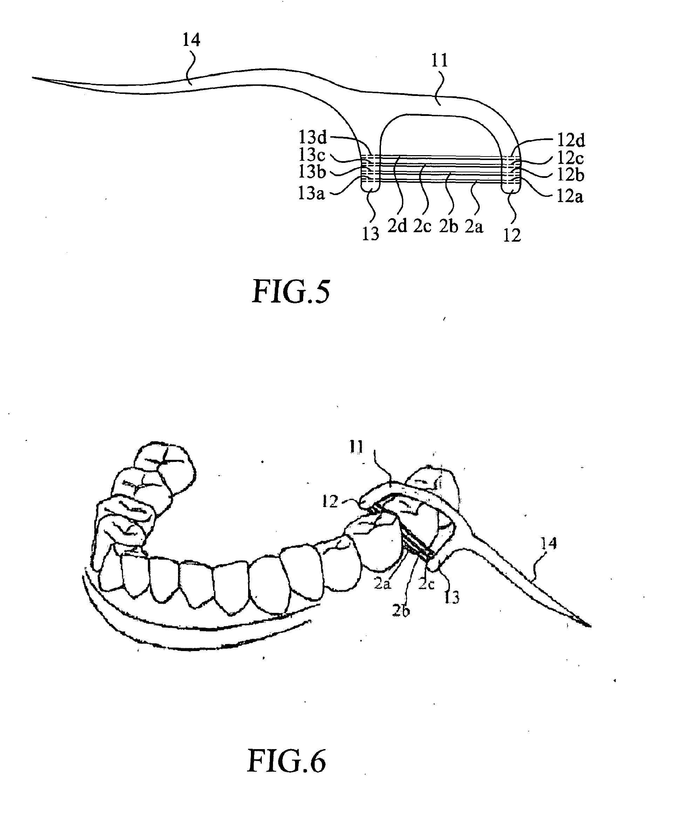

As shown in Fig. 5 which shows schematic view of an improved structure of a floss stick in accordance with a third embodiment of the present invention. The floss stick 1 of the third embodiment is similar to the first embodiment, and the same reference numerals are used to identify elements that are similar or identical in the two embodiments. The third embodiment is different from the second embodiment in that there are two fourth holes 12d and 13d arranged above the third holes 12c, 13c, respectively. A fourth floss 2d is stretched and fixed in the corresponding holes 12d, 13d at the first fork 12 and second fork 13, wherein a predetermined distance between two adjacent flosses is kept.

Please refer to Fig. 6 which shows a perspective view that the floss stick of Fig. 4 is used to floss the user's teeth. As shown in Fig. 6, when the user holds the handle 14 and puts the flosses 2a, 2b, 2c through the teeth interstice, the flosses 2a, 2b, 2c pass through the same pathway and touch the two sides of the teeth one by one. In other words, each point at the teeth interstice is scraped by the three flosses. When the user moves the floss stick 1 to and fro repeatedly, the foods and dental plaque within the teeth interstices are flossed by the flosses 2a, 2b, 2c, and then the foods and dental plaque would attach to or trapped in between these flosses.

When the user stops flossing and puts the floss stick 1 out of the teeth interstices, the foods and dental plaque at the flosses are removed out, and the teeth is thoroughly cleaned.

While the invention has been described in connection with what is presently considered to the most practical and preferred embodiments, it is to be understood that the invention is not to be limited to the disclosed embodiments, but on the contrary, is intended to cover various modifications and equivalent arrangement included within the spirit and scope of the appended claims.

## Claims

1. A floss stick (1) comprising a body (11) and two forks (12,13), two forks (12,13) being extending from the one side of the body (11) and spaced from each other with a predetermined distance, **characterized in that** a plurality of flosses (2a,2b,2c) are stretched with two ends and fixed respectively to a position close to a free end of the two forks (12,13).

2. The floss stick as claimed in claim 1, **characterized in that** a predetermined distance is kept between two adjacent flosses (2a,2b,2c).

3. The floss stick as claimed in claim 1, **characterized in that** a handle (14) further extends from the body (11).
